# EUROPÄISCHE PATENTANMELDUNG

(11) **EP 1 693 686 A1**
(43) Veröffentlichungstag der Anmeldung: **23.08.2006**
(21) Anmeldenummer: 05028763.0
(22) Anmeldetag: 30.12.2005
(51) Int. Cl.: G01V 8/12, F16P 3/14

(54) **Optoelektronischer Sensor**

(30) Priorität: 22.02.2005 DE 102005008085
(71) Anmelder: SICK AG, 79183 Waldkirch/Breisgau (DE)
(72) Erfinder: Schmitz, Stephan, Dr., 79108 Freiburg (DE)
(74) Vertreter: Manitz, Finsterwald & Partner GbR

(57) **Zusammenfassung**

Die Erfindung betrifft einen optoelektronischen Sensor zur Überwachung eines Schutzfelds einer Maschine, insbesondere einer Abkant-, Biege- oder Stanzpresse (9), mit einem Lichtsender (21) zum Aussenden eines Lichtsignals, einem ortsauflösenden Lichtempfänger (23), der von dem Lichtsignal beaufschlagt wird und entsprechende Empfangssignale erzeugt, und einer Aus- werte- und Steuereinrichtung zum Auswerten der Empfangssignale des Lichtempfängers (23), wobei die Auswerte- und Steuereinrichturig einen Steuersignalausgang aufweist, an dem in Abhängigkeit von den Empfangssignalen des Lichtempfängers (23) ein Steuersignal für die Maschine (9) ausgebbar ist. Der Sensor besitzt zusätzlich zu dem Steuersignalausgang einen separaten Empfangssignalausgang, an dem zumindest ein Teil der Empfangssignale des Lichtempfängers in der Auflösung des ortsauflösenden Lichtempfängers ausgegeben wird.

## Beschreibung

Die Erfindung betrifft einen optoelektronischen Sensor zur Überwachung eines Schutzfelds einer Maschine, insbesondere einer Abkant-, Biege- oder Stanzpresse, mit einem Lichtsender zum Aussenden eines Lichtsignals, einem ortsauflösenden Lichtempfänger, der von dem Lichtsignal beaufschlagt wird und entsprechende Empfangssignale erzeugt, und einer Auswerte- und Steuereinrichtung zum Auswerten der Empfangssignale des Lichtempfängers, wobei die Auswerte- und Steuereinrichtung einen Steuersignalausgang aufweist, an dem in Abhängigkeit von den Empfangssignalen des Lichtempfängers ein Steuersignal für die Maschine ausgebbar ist.

Ein derartiger Sensor wird zur Absicherung einer Maschine mit bewegtem Werkzeug verwendet. Typischerweise handelt es sich dabei um Gesenkpressen zum Abkanten, Wiegen, Schneiden oder Stanzen von Werkstücken, wie beispielsweise Blechteilen. Zu diesem Zweck ist der Sensor an der betreffenden Maschine angeordnet und wird beispielsweise mit einem beweglichen Werkzeug der Maschine mitbewegt. Der Sensor besitzt einen ortsauflösenden Lichtempfänger, d.h. einen optoelektronischen Empfänger mit einer Vielzahl von zueinander benachbarten Empfangselementen (z.B. CCD- oder CMOS-Matrixsensor).

Dieser ortsauflösende Lichtempfänger dient als Kamera zur Überwachung eines Schutzfeldes der Maschine, das gegen unzulässige Eingriffe gesichert werden soll. Hierfür wird der Lichtempfänger mit Lichtsignalen eines zugeordneten Lichtsenders beaufschlagt (sichtbares, Infrarot- oder UV-Licht, insbesondere in vorbestimmten Lichtpulsen). Sofern ein unzulässiger Eingriff in das Schutzfeld erfolgt, wird dies durch Signalverarbeitung und -auswertung mittels einer mit dem Lichtempfänger gekoppelten Auswerte- und Steuereinrichtung detektiert. Diese erzeugt ein entsprechendes Steuersignal an einem Steuersignalausgang. Aufgrund dieses Steuersignals wird beispielsweise eine Arbeitsbewegung der Maschine bzw. des bewegten Werkzeugs unterbrochen oder verlangsamt, um eine mögliche Verletzung der Bedienperson zu verhindern.

Derartige Sensoren mit einem ortsauflösenden Lichtempfänger und der entsprechenden Auswerte- und Steuerelektronik sind vergleichsweise aufwendig in ihrem Aufbau. Dennoch sind sie in der Praxis hinsichtlich der bestehenden Anwendungsmöglichkeiten begrenzt.

Es ist eine Aufgabe der Erfindung, die Sicherungsfunktion der bekannten Sensoren für zusätzliche Anwendungen zu erweitern.

Diese Aufgabe wird durch einen optoelektronischen Sensor mit den Merkmalen des Anspruchs 1 gelöst, und insbesondere dadurch, dass der Sensor zusätzlich zu dem Steuersignalausgang einen separaten Empfangssignalausgang aufweist, an dem zumindest ein Teil der Empfangssignale des Lichtempfängers in der Auflösung des ortsauflösenden Lichtempfängers ausgebbar ist.

Der erfindungsgemäße Sensor besitzt also ergänzend zu dem für die Sicherungsfunktion erforderlichen Steuersignalausgang einen eigenen Empfangssignalausgang, der für den Anwender frei zugänglich ist und dem Anwender das Auslesen der Empfangssignale mit der Auflösung des Lichtempfängers gestattet. An dem Empfangssignalausgang werden also die elektrischen Empfangssignale des ortsauflösenden Lichtempfängers vollständig oder zumindest teilweise ausgegeben. Dem Anwender wird somit bei geringem zusätzlichen Herstellungsaufwand eine Vielzahl von neuen bzw. zusätzlichen Anwendungsmöglichkeiten des primär zur Schutzfeldsicherung dienenden Sensors eröffnet.

Die an dem separaten Empfangssignalausgang ausgegebenen Empfangssignale können nämlich für eine sensorunabhängige Material- und/oder Prozesskontrolle verwendet und gegebenenfalls zu diesem Zweck weiter verarbeitet werden. Beispielsweise kann der Anwender anhand der zusätzlich ausgegebenen Empfangssignale die Welligkeit oder sonstige Fertigungstoleranzen des bearbeiteten Werkstücks oder Materials überprüfen. Ebenso kann die Lage des Werkstücks vor, während und/oder nach der Bearbeitung überprüft werden. Im Falle einer Biegepresse ist beispielsweise auch eine Kontrolle des Biegewinkels möglich. Die vorgenannten Überprüfungen können vom Anwender auch statistisch ausgewertet werden. Ferner kann der Anwender die verfügbaren Empfangssignale auch für das Auslösen nachfolgender Bearbeitungsschritte oder Werkzeugbewegungen verwenden.

Indem die Empfangssignale des ortsauflösenden Lichtempfängers in einer solchen Form an dem separaten Empfangssignalausgang zur Verfügung gestellt werden, in der die Empfangssignale noch nicht einer weiteren Signalverarbeitung unterzogen worden sind, steht es dem Anwender frei, je nach Applikation (z.B. Art der Maschine oder der Werkzeugbewegung) beliebige der vorgenannten Auswertungen auszuwählen oder andere Auswertungen vorzunehmen. Wichtig ist jedenfalls, dass die Empfangssignale an dem Empfangssignalausgang mit der physikalischen Auflösung des ortsauflösenden Empfängers (Matrixempfängers) ausgegeben werden, so dass für den Anwender die Option erhalten bleibt, die gewünschten Auswertungen mit der größtmöglichen Genauigkeit durchzuführen.

Indem die sicherheitsrelevante Schnittstelle (Steuersignalausgang) von der reinen Datenausgabe (Empfangssignalausgang) getrennt ist, ist hinsichtlich der Sicherungsfunktion des Sensors die erforderliche Betriebs- und Manipulationssicherheit gewährleistet, d.h. die Empfangssignale sind an dem Empfangssignalausgang unabhängig von der Erzeugung von sicherheitsrelevanten Steuersignalen am Steuersignalausgang abrufbar, und umgekehrt.

Um die Empfangssignale des ortsauflösenden Lichtempfängers möglichst unverfälscht am Empfangssignalausgang bereitzustellen, können zwischen den Lichtempfänger und den Empfangssignalausgang zwar eine Verstärkungsschaltung, ein Analog/ Digital-Wandler, eine Schnittstellenelektronik zur Signal/Protokoll-Anpassung und dergleichen geschaltet sein. Allerdings ist es bevorzugt, wenn darüber hinaus keine (zusätzlichen) Signalverarbeitungseinrichtungen zwischen den Lichtempfänger und den Empfangssignalausgang geschaltet sind, d.h. die Empfangssignale sollen grundsätzlich möglichst nah am Lichtempfänger abgezweigt werden.

Es ist nicht unbedingt erforderlich, dass an dem Empfangssignalausgang sämtliche Empfangssignale, d.h. die Empfangssignale aller Empfangselemente des ortsauflösenden Lichtempfängers ausgegeben werden. Stattdessen kann vorgesehen sein, dass lediglich ein Teil der Empfangssignale ausgegeben wird, jedoch weiterhin mit voller Auflösung. Dieser Teil entspricht insbesondere einem geschlossenen Bereich der lichtempfindlichen Fläche des Lichtempfängers bzw. einem geschlossenen Abschnitt des überwachten Schutzfelds. Vorzugsweise kann dieser Bereich vom Anwender je nach gewünschter Applikation frei ausgewählt werden. Diese Weiterbildung der Erfindung hat den Vorteil, dass an dem Empfangssignalausgang lediglich ein vergleichsweise geringer Datenstrom ausgegeben bzw. abgegriffen werden muss, der einem bestimmten Abschnitt des überwachten Schutzfelds entspricht.

Weiterhin ist es bevorzugt, wenn der Empfangssignalausgang - wie bereits erläutert - als eine für den Anwender frei zugängliche Schnittstelle ausgebildet ist. Vorzugsweise handelt es sich um eine Standardschnittstelle, so dass die Empfangssignale für unterschiedliche Applikationen flexibel ausgelesen werden können. Insbesondere ist der Empfangssignalausgang als eine serielle Schnittstelle (z.B. RS485) ausgebildet.

Die Erfindung bezieht sich auch auf die Verwendung eines optoelektronischen Sensors der erläuterten Art sowohl zur Sicherung eines Schutzfelds einer Maschine als auch zur separaten Ausgabe der Empfangssignale in der Auflösung des Lichtempfängers für eine sensorunabhängige Material- und/oder Prozesskontrolle.

Weitere Ausführungsformen der Erfindung sind in den Unteransprüchen genannt.

Die Erfindung wird nachfolgend lediglich beispielhaft unter Bezugnahme auf die Zeichnungen erläutert.
- Fig. 1: zeigt eine Frontansicht einer Gesenkbiegepresse.
- Fig. 2: zeigt einen von einem Lichtstrahl beaufschlagten ortsauflösenden Lichtempfänger.
- Fig. 3: zeigt Teile der Gesenkbiegepresse gemäß Fig. 1 in einer Seitenansicht während eines unzulässigen Eingriffs in das Schutzfeld.
- Fig. 4: zeigt ein Schaltbild des Sensors der Gesenkbiegepresse gemäß Fig. 1.

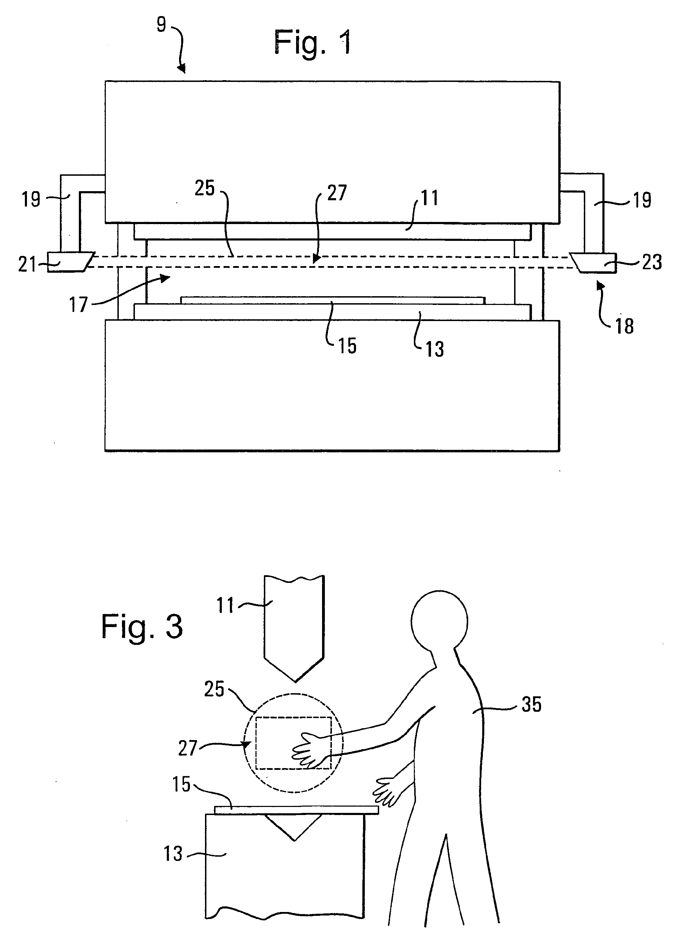

Fig. 1 zeigt in einer Vorderansicht eine Gesenkbiegepresse 9. Diese besitzt ein Oberwerkzeug 11, das zu einer Arbeitsbewegung vertikal nach unten gegen ein Unterwerkzeug 13 angetrieben werden kann, um ein auf dem Unterwerkzeug 13 aufliegendes Werkstück 15 zu biegen. Während dieser Arbeitsbewegung wird ein Öffnungsspalt 17 zwischen dem Oberwerkzeug 11 und dem Werkstück 15 allmählich geschlossen.

Die Gesenkbiegepresse 9 ist mit einem optoelektronischen Sensor 18 ausgestattet, der als Schutzeinrichtung für eine Bedienperson dient. Hierfür ist an beiden Seiten des Oberwerkzeugs 11 jeweils ein Haltearm 19 vorgesehen. Die Haltearme 19 tragen einen Lichtsender 21 und einen ortsauflösenden Lichtempfänger 23. Der Lichtsender 21 besitzt beispielsweise eine Laserdiode mit einer Sendeoptik (nicht gezeigt), die das Sendelicht zu einem Lichtstrahl 25 aufweitet. Der Lichtempfänger 23 besitzt beispielsweise einen CMOS-Matrixempfänger, der über eine Empfangsoptik (nicht gezeigt) von dem Lichtstrahl 25 beaufschlagt wird.

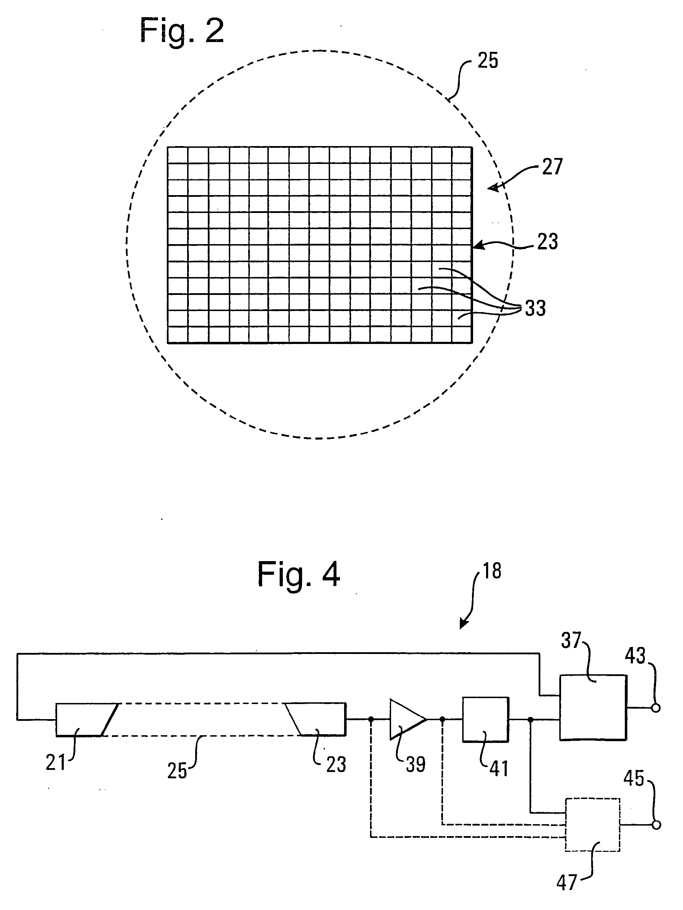

Der Lichtstrahl 25 durchquert den Öffnungsspalt 17 unterhalb des Oberwerkzeugs 11. Der Umriss des aktivierten Bereichs des Lichtempfängers 23 definiert innerhalb des Lichtstrahls 25 ein volumenförmiges Schutzfeld 27 zwischen dem Oberwerkzeug 11 und dem Unterwerkzeug 13, das der erläuterten Bewegung des Oberwerkzeugs 11 folgt. Sobald eine Auswerte- und Steuereinrichtung des Sensors (Fig. 4) eine zumindest teilweise Unterbrechung des Lichtstrahls 25 innerhalb des Schutzfelds 27 detektiert, löst sie ein Steuersignal aus, beispielsweise um die Bewegung des Oberwerkzeugs 11 anzuhalten oder zu verlangsamen. Dadurch wird eine Bedienperson, die beispielsweise das Werkstück 15 in den Öffnungsspalt 17 einführt, vor Verletzungen durch das Oberwerkzeug 11 geschützt.

Fig. 2 zeigt den Lichtempfänger 23 in einer Frontansicht. Der Lichtempfänger 23 besitzt eine Vielzahl von photosensitiven Empfangselementen 33 in einer Matrixanordnung. In der Frontansicht gemäß Fig. 2 erscheint der Lichtstrahl 25 als ein Lichtfleck, der mittels der genannten Empfangsoptik auf den Lichtempfänger 23 abgebildet wird. Innerhalb des Lichtstrahls 25 begrenzt der Umriss der lichtempfindlichen Fläche des Lichtempfängers 23 (bzw. deren optische Abbildung) das überwachte Schutzfeld 27, wie bereits erläutert.

In der Seitenansicht gemäß Fig. 3 sind das Oberwerkzeug 11 und das Unterwerkzeug 13 der Gesenkbiegepresse 9 gemäß Fig. 1 gezeigt. Ferner ist eine Bedienperson 35 zu sehen, die in unzulässiger Weise in das mittels des Sensors 18 überwachte Schutzfeld 27 eingreift. Hierdurch wird das bereits erläuterte Steuersignal zum Anhalten oder Verlangsamen der Bewegung des Oberwerkzeugs 11 ausgelöst.

Fig. 4 zeigt ein Schaltbild des Sensors 18 gemäß Fig. 1. Eine Auswerte- und Steuereinrichtung 37 ist zum einen eingangsseitig mit dem Lichtsender 21 verbunden, um diesen zum Aussenden des Lichtstrahls 25 anzusteuern. Zum anderen ist die Auswerte- und Steuereinrichtung 37 über einen Verstärker 39 und einen Analog/Digital-Wandler 41 eingangsseitig auch mit dem Lichtempfänger 23 verbunden. Die Auswerte- und Steuereinrichtung 37 besitzt außerdem einen Steuersignalausgang 43.

Die Auswerte- und Steuereinrichtung 37 wertet die Empfangssignale des Lichtempfängers 23 nach Verstärkung im Verstärker 39 und nach Digitalisierung im Analog/Digital-Wandler 41 auf unzulässige Unterbrechungen des Lichtstrahls 25 aus. Hierfür kann die Auswerte- und Steuereinrichtung 37 beispielsweise eine Vergleichseinrichtung aufweisen, die die Empfangssignale der einzelnen Empfangselemente 33 (Fig. 2) zu vorbestimmten Auswertegruppen zusammenfasst und diese Auswertegruppen mit vorbestimmten Referenzwerten vergleicht. Falls dabei vorbestimmte Schwellenwerte überschritten werden, wird an dem Steuersignalausgang 43 das bereits erläuterte Steuersignal zum Anhalten oder Verlangsamen der Werkzeugbewegung ausgelöst.

Entlang des Signalpfads zwischen dem Lichtempfänger 23 und der Auswerte- und Steuereinrichtung 37 ist außerdem eine Signalabzweigung vorgesehen, über die die Empfangssignale des ortsauflösenden Lichtempfängers 23 direkt an einen separaten Empfangssignalausgang 45 ausgegeben werden. Somit stehen die Empfangssignale des Lichtempfängers 23 an dem Empfangssignalausgang 45 für den Anwender mit der vollen Ortsauflösung und in Echtzeit zur Verfügung, so dass der Anwender die Empfangssignale - unabhängig und zusätzlich zu der Sicherungsfunktion des Sensors 18 - in nahezu beliebiger Weise für zusätzliche Anwendungen auswerten oder weiterverarbeiten kann. Insbesondere können die Empfangssignale dazu genutzt werden, während der Werkstückbearbeitung die Lage oder die Beschaffenheit des Werkstücks 15 zu überprüfen.

Aufgrund der getrennten Ausbildung des Steuersignalausgangs 43 einerseits und des Empfangssignalausgangs 45 andererseits wird durch die erläuterte Erweiterung der Anwendungsmöglichkeiten des Sensors 18 die primäre Schutzfunktion des Sensors 18 nicht beeinträchtigt. Die Möglichkeit der zusätzlichen Ausgabe der Empfangssignale in Form von Rohdaten kann mit minimalem zusätzlichen Herstellungsaufwand bewerkstelligt werden.

Aus Fig. 4 ist ersichtlich, dass die am Empfangssignalausgang 45 bereitgestellten Empfangssignale noch vor der weiteren Verarbeitung innerhalb der Auswerte- und Steuereinrichtung 37 abgezweigt werden. Vorzugsweise werden die Empfangssignale erst nach einer ersten Verstärkung und nach der Digitalisierung abgezweigt. Es ist jedoch auch möglich, die Empfangssignale für die Ausgabe am Empfangssignalausgang 45 bereits unmittelbar nach dem Lichtempfänger 23 oder unmittelbar nach dem Verstärker 39 abzugreifen, wie in Fig. 4 gestrichelt gezeigt ist.

Ferner ist es bevorzugt, wenn die Empfangssignale über eine Schnittstellenelektronik 47 geführt werden (in Fig. 4 ebenfalls gestrichelt gezeigt), die für eine Ausgabe der Empfangssignale in einem gängigen Format bzw. gemäß einem gängigen Protokoll sorgt. Insbesondere kann der Empfangssignalausgang 45 somit als serielle Standardschnittstelle ausgebildet sein, so dass der Anwender plattformunabhängig auf die Empfangssignale zugreifen kann.

### Bezugszeichenliste

- 9: Gesenkbiegepresse
- 11: Oberwerkzeug
- 13: Unterwerkzeug
- 15: Werkstück
- 17: Öffnungsspalt
- 18: Sensor
- 19: Haltearm
- 21: Lichtsender
- 23: Lichtempfänger
- 25: Lichtstrahl
- 27: Schutzfeld
- 33: Empfangselement
- 35: Bedienperson
- 37: Auswerte- und Steuereinrichtung
- 39: Verstärker
- 41: Analog/ Digital-Wandler
- 43: Steuersignalausgang
- 45: Empfangssignalausgang
- 47: Schnittstellenelektronik

## Patentansprüche

1. Optoelektronischer Sensor (18) zur Überwachung eines Schutzfelds (27) einer Maschine (9), insbesondere einer Abkant-, Biege- oder Stanzpresse,
mit einem Lichtsender (21) zum Aussenden eines Lichtsignals (25), einem ortsauflösenden Lichtempfänger (23), der von dem Lichtsignal beaufschlagt wird und entsprechende Empfangssignale erzeugt, und einer Auswerte- und Steuereinrichtung (37) zum Auswerten der Empfangssignale des Lichtempfängers, wobei die Auswerte- und Steuereinrichtung einen Steuersignalausgang (43) aufweist, an dem in Abhängigkeit von den Empfangssignalen des Lichtempfängers ein Steuersignal für die Maschine ausgebbar ist,
**dadurch gekennzeichnet,**
**dass** der Sensor (18) zusätzlich zu dem Steuersignalausgang (43) einen separaten Empfangssignalausgang (45) aufweist, an dem zumindest ein Teil der Empfangssignale des Lichtempfängers (23) in der Auflösung des ortsauflösenden Lichtempfängers ausgebbar ist.

2. Sensor nach Anspruch 1,
**dadurch gekennzeichnet,**
**dass** zwischen den Lichtempfänger (23) und den Empfangssignalausgang (45) eine Verstärkungsschaltung (39), ein Analog/Digital-Wandler (41) und/oder eine Schnittstellenelektronik (47) geschaltet sind.

3. Sensor nach Anspruch 2,
**dadurch gekennzeichnet,**
**dass** keine weitere Signalverarbeitungseinrichtung zwischen den Lichtempfänger (23) und den Empfangssignalausgang (45) geschaltet ist.

4. Sensor nach einem der vorhergehenden Ansprüche,
**dadurch gekennzeichnet,**
**dass** an dem Empfangssignalausgang (45) ein solcher Teil der Empfangssignale des Lichtempfängers ausgebbar ist, der einem geschlossenen Bereich der lichtempfindlichen Fläche des Lichtempfängers (23) entspricht.

5. Sensor nach einem der vorhergehenden Ansprüche,
**dadurch gekennzeichnet,**
**dass** der Empfangssignalausgang (45) als eine für den Anwender frei zugängliche Schnittstelle ausgebildet ist.

6. Sensor nach einem der vorhergehenden Ansprüche,
**dadurch gekennzeichnet,**
**dass** der Empfangssignalausgang (45) als eine serielle Schnittstelle ausgebildet ist.

7. Verwendung eines optoelektronischen Sensors (18),
der einen Lichtsender (21) zum Aussenden eines Lichtsignals (25) und einen ortsauflösenden Lichtempfänger (23) aufweist, der von dem Lichtsignal beaufschlagt wird und entsprechende Empfangssignale erzeugt,
sowohl zur Sicherung eines Schutzfelds (27) einer Maschine (9) als auch zur Ausgabe zumindest eines Teils der Empfangssignale in der Auflösung des Lichtempfängers (23) an einem separaten Empfangssignalausgang (45).
